# EUROPÄISCHE PATENTSCHRIFT

(11) **EP 2 452 242 B1**
(45) Veröffentlichungstag und Bekanntmachung des Hinweises auf die Patenterteilung: **12.02.2014**
(21) Anmeldenummer: 10720914.0
(22) Anmeldetag: 19.05.2010
(51) Int. Cl.: F16K 31/06, G05D 16/10, G05D 16/20

(54) **DRUCKREGELVENTIL**
PRESSURE CONTROL VALVE
SOUPAPE DE RÉGULATION DE PRESSION

(30) Priorität: 08.07.2009 DE 102009032374
(43) Veröffentlichungstag der Anmeldung: 16.05.2012
(73) Patentinhaber: Pierburg GmbH, 41460 Neuss (DE)
(72) Erfinder: BUSE, Werner, 41564 Kaarst (DE); FERNANDES, Alvito, 51377 Leverkusen (DE)
(74) Vertreter: ter Smitten, Hans
(86) Internationale Anmeldenummer: PCT/EP2010/056891
(87) Internationale Veröffentlichungsnummer: WO 2011/003662

(56) Entgegenhaltungen:
- WO-A2-00/18382

## Beschreibung

Die Erfindung betrifft ein Druckregelventil mit einem Gehäuse, das einen Referenzdruckanschluss und eine Referenzdruckkamner, einen Vordruckanschluss und eine Vordruckkammer sowie einen Regeldruckanschluss und eine Regeldruckkammer aufweist, die mit einem in dem Gehäuse in Axialrichtung bewegbaren Steuerglied derart zusammenwirken, dass ein gewünschter Regeldruck zwischen einem Vordruck, der am Vordruckanschluss anliegt und einem Referenzdruck, der am Referenzdruckanschluss anliegt, einstellbar ist, wobei mindestens eine erste Dichteinrichtung vorgesehen ist, die die Referenzdruckkammer gegenüber dem Steuerglied abdichtet, wobei mindestens eine zweite Dichteinrichtung vorgesehen ist, die die Vordruckkammer gegenüber der Referenzdruckkammer abdichtet und wobei mindestens eine dritte Dichteinrichtung vorgesehen ist, die die Regeldruckkammer gegenüber der Vordruckkammer abdichtet.

Das Dokument WO 00/18382 beschreibt ein Wegenventil mit einen Steuerkolben welcher gegen die Kraft einer Feder durch den Stössel eines Magneten aus seiner ersten Stellung in seine zweite Stellung verstellbar ist.

Derartige Druckregelventile sind hinlänglich bekannt. Die DE 10 2007 002 153 B3 beschreibt beispielsweise ein Druckregelventil, bei dem mindestens drei Dichteinrichtungen vorgesehen sind, um die jeweiligen Kammern gegenüber einander abzudichten. Um das Hystereseverhalten eines derartigen Druckregelventils zu verbessern, sind die Dichteinrichtungen jedoch so ausgeführt, dass jeweils ein in Axialrichtung wirkendes Dichtorgan mit einer in Axialrichtung weisenden Dichtfläche zusammenwirkt. Aufgrund der im Wesentlichen in Reihe geschalteten Dichteinrichtungen kann es aufgrund von Koaxialfedern zu Undichtigkeiten kommen. Des Weiteren kann bei einer derartigen Ausführungsform bei einer Offenstellung der zweiten Dichteinrichtung ein Druckmedium entlang des Steuergliedes von der Vordruckkammer in die Referenzdruckkammer gelangen.

Es ist daher Aufgabe der Erfindung, ein Druckregelventil bereitzustellen, das die vorgenannten Nachteile vermeidet und mit einer möglichst geringen Bauteileanzahl auf günstige Weise herstellbar ist.

Diese Aufgabe wird erfindungsgemäß dadurch gelöst, dass die zweite Dichteinrichtung ein zweites Dichtorgan aufweist, das in dem Gehäuse und/oder im Steuerglied formschlüssig angeordnet ist, jedoch in Radialrichtung von dem Steuerglied beabstandet ist. Hierdurch wird ein Druckregelventil geschaffen, das die Vorteile eines verbesserten Hystereseverhaltens mit einer zuverlässigen Abdichtung der einzelnen Kammern gegenüber einander verbindet.

In einer bevorzugten Ausführungsform der Erfindung ist das Steuerglied mehrteilig ausgeführt, wobei ein sich in Längsrichtung erstreckender Hohlkörper vorgesehen ist, der an seinen beiden Enden ein erstes Dichtorgan der ersten Dichteinrichtung und ein drittes Dichtorgan der dritten Dichteinrichtung aufweist. Auf diese Weise wird ein einfach zu montierendes Steuerglied geschaffen, wobei die Referenzdruckkammer über den als Hohlraum ausgebildeten Kanal im Steuerglied mit der Regeldruckkammer verbindbar ist. Dabei ist es vorteilhaft, dass das Steuerglied durch einen Ventilstößel der Antriebsrichtung bewegbar ist. Auf einfache Weise ist dann das zweite Dichtorgan zwischen dem sich in Längsrichtung erstreckenden Hohlkörper und dem ersten Dichtorgan angeordnet.

Das Gehäuse ist vorteilhafterweise aus einem ersten, zweiten und dritten Gehäuseteil aufgebaut. Dabei kann das zweite Dichtorgan zwischen dem ersten und zweiten Gehäuseteil angeordnet sein.

Eine besonders einfach auszuführende Ausführungsform wird dadurch geschaffen, dass der Ventilstößel eine Dichtfläche der ersten Dichteinrichtung bildet und durch ein erstes Federmittel gegenüber dem ersten Gehäuseteil vorgespannt ist. Auch ist es vorteilhft, wenn das zweite Gehäuseteil eine Dichtfläche der dritten Dichteinrichtung bildet. Dabei kann das dritte Dichtorgan durch ein zweites Federmittel gegenüber dem dritten Gehäuseteil vorgespannt sein

Darüber hinaus ist es vorteilhaft, wenn eine Membrane zur Abdichtung der Antriebsvorrichtung gegenüber der Referenzdruckkammer vorgesehen ist. Dabei ist es denkbar, dass die Membrane das erste Federmittel bildet.

Auch hier kann es vorteilhaft sein, wenn das zweite Dichtorgan eine derartige Vorspannung aufweist, dass diese das zweite Federmittel ersetzt.

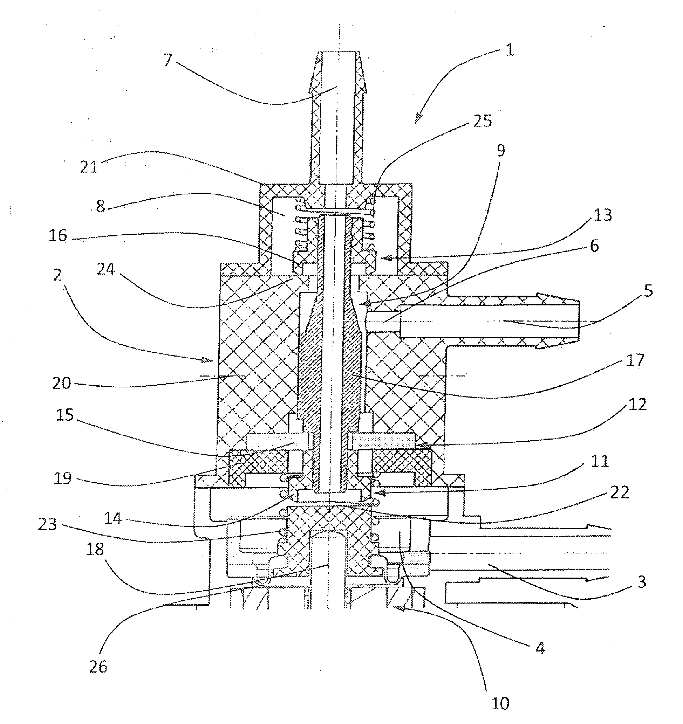

Eine Ausführungsform der Erfindung wird nachfolgend anhand der Zeichnung näher beschrieben, wobei die einzige Figur eine schematische Schnittdarstellung eines erfindungsgemaßen Druckregelventils ist.

Die Figur zeigt ein Druckregelventil 1 mit einem Gehäuse 2, das ein Referenzdruckanschluss 3 und eine Referenzdruckkammer 4, einen Vordruckanschluss 5 und eine Vordruckkammer 6 sowie ein Regeldruckanschluss 7 und eine Regeldruckkammer 8 aufweist. Des Weiteren ist in dem Gehäuse 2 ein Steuerglied 9 angeordnet, das in axialer Richtung bewegbar gelagert ist. Durch eine oszillierende Bewegung des Steuergliedes 9 ist ein gewünschter Regeldruck, der sich aus dem am Vordruckanschluss 5 anliegenden Vordruck und einem am Referenzdruckanschluss 7 anliegenden Referenzdruck ergibt, einstellbar. Der minimale Regeldruck entspricht also dem Referenzdruck, üblicherweise der Atmosphäre und der maximale Regeldruck entspricht dem an Vordruckanschluss 5 anliegenden Vordruck.

Dabei ist eine Antriebsvorrichtung 10 vorgesehen, die auf das Steuerglied 9 einwirkt. Die Antriebsvorrichtung 10 ist hier lediglich bruchstückhaft dargestellt, dass sie hinsichtlich des Wesens der Erfindung keine Rolle spielt. Vorteilhafterweise ist ein Elektromagnetantrieb vorzusehen, es können jedoch auch andere Antriebsvorrichtungen, wie zum Beispiel pneumatische, elektromotorische Antriebsvorrichtungen eingesetzt werden. Im vorliegenden Fall weist der durch den Elektromagnetantrieb 10 angetriebene Ventilstößel 26 eine Dichtfläche 22 auf, die zusammen mit einem ersten Dichtorgan 14 eine erste Dichteinrichtung bildet. Diese erste Dichteinrichtung 11 dient der Abdichtung der Referenzdruckkammer gegenüber dem Steuerglied und damit auch gegenüber der Regeldruckkammer 8. Des Weiteren ist eine zweite Dichteinrichtung 12 vorgesehen, die erfindungsgemäß aus einem als Dichtring ausgebildeten Dichtorgan 15 besteht, das sowohl in dem Gehäuse 2 als auch im Steuerglied 9 formschlüssig angeordnet ist. Um jedoch ein gutes Hystereseverhalten zu gewährleisten, ist dieses Dichtorgan 15 vom Steuerglied 9 in Radialrichtung beabstandet. Die zweite Dichteinrichtung 12 gewährleistet in jedem Betriebszustand des Druckregelventils 1 eine Abdichtung der Vordruckkammer 6 gegenüber der Referenzdruckkammer 7. Des Weiteren ist eine dritte Dichteinrichtung 13 vorgesehen, die im Wesentlichen aus einem Dichtorgan 16 und einer dazu gehörigen Dichtfläche 24 besteht.

In der vorliegenden Ausführungsform ist das Steuerglied 9 mehrteilig ausgeführt wobei ein sich in Längsrichtung erstreckender Hohlkörper 17 vorgesehen ist, der an seinen beiden Enden das erste Dichtorgan 14 und das dritte Dichtorgan 16 aufweist.

Das Gehäuse 2 besteht aus montagetechnischen Gründen aus einem ersten Gehäuseteil 19, einem zweiten Gehäuseteil 20 und einem dritten Gehäuseteil 21. Dadurch kann die radial nach außen gerichtete Seite des zweiten Dichtorgans 15 zwischen dem ersten Gehäuseteil 19 und dem zweiten Gehäuseteil 20 angeordnet sein und die radial nach innen gerichtete Seite des Dichtorgans 15 zwischen den sich in Längsrichtung erstreckenden Hohlkörper 17 und dem ersten Dichtorgan 14 angeordnet sein. Des Weiteren ist der Ventilstößel 18 über die Dichtfläche 22 mittels einem ersten Federmittel 23 gegenüber dem ersten Gehäuseteil 19 vorgespannt. In gleicher Weise ist das dritte Dichtorgan 16 über ein zweites Federmittel 25 gegenüber dem dritten Gehäuseteil 21 vorgespannt. Außerdem ist noch eine Membrane zur Abdichtung der Antriebsvorrichtung 10 gegenüber der Referenzdruckkammer 8 vorgesehen. Durchaus denkbar ist, dass die Membrane 26 gleichzeitig das erste Federmittel 23 bildet, so dass die hier vorgesehene Feder entfallen kann.

Das Druckregelventil arbeitet nun wie folgt:
Die einzige Figur zeigt das Druckventil im nicht-angetriebenen Zustand. Die Vordruckkammer ist durch die zweite Dichteinrichtung 12 und die dritte
Dichteinrichtung 13 gegenüber der Referenzdruckkammer 4 und der Regeldruckkammer 8 abgedichtet. Die Referenzdruckkammer 4 ist jedoch über die geöffnete erste Dichteinrichtung 11 und das Steuerglied 9 mit der Regeldruckkammer 8 verbunden, so dass am Regeldruckanschluss der Referenzdruck im vorliegenden Ausführungsbeispiel Atmosphärendruck vorliegt.

Wird nun die im Ausführungsbeispiel vorgesehene elektromagnetische Antriebsvorrichtung 10 bestromt, so wird der Ventilstößel 26 und damit die Dichtfläche 22 in Richtung des Steuergliedes 9 bewegt. Mit Anlage der Dichtfläche 22 am Dichtorgan 14 wird die Referenzdruckkammer 4 gegenüber der Regeldruckkammer 8 abgedichtet. Eine weitere Bewegung wird dazu führen, dass das Dichtorgan 16 von der Dichtfläche 24 abhebt und die Vordruckkammer 9 mit der Regeldruckkammer 8 verbindet, so dass ein Medium mit dem anliegenden Vordruck in die Regeldruckkammer 8 gelangen kann. Durch die Dichteinrichtung 12 und die vorgenannte ausgeführte besondere Ausführungsform mittel des Dichtorgans 15 ist auch in diesem Betriebszustand sichergestellt, dass die Vordruckkammer 6 gegenüber der Referenzdruckkammer 4 abgedichtet ist. Eine Unterbrechung der Stromzuführung wird unter Zuhilfenahme des ersten Federmittels 23 und des zweiten Federmittels 25 die Druckregeleinrichtung wieder in den Ausgangszustand überführen, wobei die Referenzdruckkammer 4 wieder mit der Regeldruckkammer 8 verbunden ist. Über eine entsprechende Ansteuerung der Antriebsvorrichtung 10 ist dann grundsätzlich jeder Regeldruck zwischen Referenzdruck und Vordruck am Regeldruckanschluss 7 einstellbar.

Eine weitere Vereinfachung des Druckregelventils besteht beispielsweise darin, dass das zweite Dichtorgan 15 eine derartige Vorspannung aufweist, dass das zweite Federmittel 25 entfallen kann.

Auch ist es natürlich möglich, dass das zweite Dichtorgan 15 entweder nur in dem Gehäuse 2 oder nur im Steuerglied 9 formschlüssig angeordnet ist.

## Patentansprüche

1. Druckregelventil mit einem Gehäuse (2), das einen Referenzdruckanschluss (3) und eine Referenzdruckkamer (4), einen Vordruckanschluss (5) und eine Vordruckkamer (6) sowie einen Regeldruckanschluss (7) und eine Regeldruckkamer (8) aufweist, die mit einem in dem Gehäuse (2) in Axialrichtung bewegbaren Steuerglied (9) derart zusammenwirken, dass ein gewünschter Regeldruck zwischen einem Vordruck, der am Vordruckanschluss (5) anliegt und einem Referenzdruck, der am Referenzdruckanschluss (7) anliegt, einstellbar ist, wobei eine Antriebsvorrichtung (10) vorgesehen ist, die auf das Steuerglied (9) wirkt, wobei mindestens eine erste Dichteinrichtung (11) vorgesehen ist, die die Referenzdruckkamer (8) gegenüber dem Steuerglied (9) abdichtet, wobei mindestens eine zweite Dichteinrichtung (12) vorgesehen ist, die die Vordruckkammer (6) gegenüber der Referenzdruckkammer (7) abdichtet und wobei mindestens eine dritte Dichteinrichtung (13) vorgesehen ist, die die Regeldruckkammer (7) gegenüber der Vordruckkamer (6) abdichtet,
**dadurch gekennzeichnet, dass**
die zweite Dichteinrichtung (12) ein zweites Dichtorgan (15) aufweist, das in dem Gehäuse (2) und/oder im Steuerglied (9) formschlüssig angeordnet ist, jedoch in Radialrichtung von dem Steuerglied (9) beabstandet ist.

2. Druckregelventil nach Anspruch 1, **dadurch gekennzeichnet, dass** das Steuerglied (9) mehrteilig ausgeführt ist, wobei ein sich in Längsrichtung erstreckender Hohlkörper (17) vorgesehen ist, der an seinen beiden Enden ein erstes Dichtorgan (14) der ersten Dichteinrichtung (11) und ein drittes Dichtorgan (16) der dritten Dichteinrichtung (13) aufweist.

3. Druckregelventil nach Anspruch 1 oder 2, **dadurch gekennzeichnet, dass** Steuerglied (9) durch einen Vertilstössel (18) der Antriebsvorrichtung (10) bewegbar ist.

4. Druckregelventil nach Anspruch 2 oder 3, **dadurch gekennzeichnet, dass** das zweite Dichtorgan (15) zwischen dem sich in Längsrichtung erstreckenden Hohlkörper (17) und dem ersten Dichtorgan (14) angeordnet ist.

5. Druckregelventil nach einem der vorhergehenden Ansprüche, **dadurch gekennzeichnet, dass** das Gehäuse (2) aus einem ersten (19), zweiten (20) und dritten Gehäuseteil (21) aufgebaut ist.

6. Druckregelventil nach Anspruch 5, **dadurch gekennzeichnet, dass** das zweite Dichtorgan (15) zwischen dem ersten und zweiten Gehäuseteil (19, 20) angeordnet ist.

7. Druckregelventil nach einem der Ansprüche 3 - 6, **dadurch gekennzeichnet, dass** der Ventilstössel (18) eine Dichtfläche (22) der ersten Dichteinrichtung (11) bildet und durch ein erstes Federmittel (23) gegenüber dem ersten Gehäuseteil (19) vorgespannt ist.

8. Druckregelventil nach einem der Ansprüche 3 - 7, **dadurch gekennzeichnet, dass** das zweite Gehäuseteil (20) eine Dichtfläche (24) der dritten Dichteinrichtung (13) bildet.

9. Druckregelventil nach einem der Ansprüche 3 - 8, **dadurch gekennzeichnet, dass** das dritte Dichtorgan (16) durch ein zweites Federmittel (25) gegenüber dem dritten Gehäuseteil (21) vorgespannt ist.

10. Druckregelventil nach einem der vorhergehenden Ansprüche, **dadurch gekennzeichnet, dass** eine Membrane (26) zur Abdichtung der Antriebsvorrichtung (10) gegenüber der Referenzdruckkammer (8) vorgesehen ist.

11. Druckregelventil nach Anspruch 10, **dadurch gekennzeichnet, dass** die Membrane (26) das erste Federmittel bildet.

12. Druckregelventil nach einem der Ansprüche 9 - 11, **dadurch gekennzeichnet, dass** das zweite Dichtorgan (15) eine derartige Vorspannung aufweist, dass diese das zweite Federmittel (25) ersetzt.

## Claims

1. A pressure control valve comprising a housing (2) that has a reference pressure connection (3) and a reference pressure chamber (4), a preliminary pressure connection (5) and a preliminary pressure chamber (6), and a control pressure connection (7) and a control pressure chamber (8) which cooperate with a control member (9) moveable in the axial direction within the housing (2), in such a way that a desired control pressure can be adjusted between a preliminary pressure at the preliminary pressure connection (5) and a reference pressure at the reference pressure connection (7), a driving device (10) being provided which acts on the control member (9), at least one first sealing device (11) being provided which seals the reference pressure chamber (8) against the control member (9), at least one second sealing device (12) being provided which seals the preliminary pressure chamber (6) against the reference pressure chamber (7), and at least one third sealing device (13) being provided which seals the control pressure chamber (7) against the preliminary pressure chamber (6),
**characterized in that**
the second sealing device (12) includes a second sealing element (15) that is in a form-locking manner arranged within the housing (2) and/or within the control member (9) while being disposed at a distance from the control member (9) in the radial direction.

2. The pressure control valve according to claim 1, **characterized in that** the control member (9) is of a multi-part design, there being provided a hollow body (17) extending in the longitudinal direction, having on both of its ends a first sealing member (14) of the first sealing device (11) and a third sealing element (16) of the third sealing device (13).

3. The pressure control valve according to claim 1 or 2, **characterized in that** the control member (9) is moveable by a valve stem (18) of the drive means (10).

4. The pressure control valve according to claim 2 or 3, **characterized in that** the second sealing element (15) is arranged between said hollow body (17) extending in the longitudinal direction and the first sealing member (14).

5. The pressure control valve according to any one of the preceding claims, **characterized in that** the housing (2) comprises a first (19), a second (20) and a third housing portion (21).

6. The pressure control valve according to claim 5, **characterized in that** the second sealing element (15) is arranged between the first and the second housing portion (19, 20).

7. The pressure control valve according to any one of claims 3 - 6, **characterized in that** the valve stem (18) forms a sealing face (22) of the first sealing device (11) and is biased against the first housing portion (19) by a first spring means (23).

8. The pressure control valve according to any one of claims 3 - 7, **characterized in that** the second housing portion (20) forms a sealing face (24) of the third sealing device (13).

9. The pressure control valve according to any one of claims 3 - 8, **characterized in that** the third sealing element (16) is biased against the third housing portion (21) by a second spring means (25).

10. The pressure control valve according to any one of the preceding claims, **characterized in that** a membrane (26) is provided for sealing the driving device (10) against the reference pressure chamber (8).

11. The pressure control valve according to claim 10, **characterized in that** the membrane (26) forms said first spring means.

12. The pressure control valve according to any one of claims 9 - 11, **characterized in that** the second sealing element (15) has a such a suitable bias for replacing the second spring means (25).

## Revendications

1. Soupape de régulation de pression avec un boitier (2) comprenant un raccord de pression de référence (3) et une chambre de pression de référence (4), un raccord de pression d'alimentation (5) et une chambre de pression d'alimentation (6), ainsi qu'un raccord de pression de régulation (7) et une chambre de pression de régulation (8), qui coopèrent avec un organe de commande (9), mobile axialement dans ledit boitier (2), de sorte qu'une pression de régulation peut être réglée entre une pression d'alimentation appliquée sur le raccord de pression d'alimentation (5), et une pression de référence appliquée sur ledit raccord de pression de référence (7), un dispositif d'entrainement (10) étant prévu pour agir sur ledit organe de commande (9), au moins un premier dispositif d'étanchéité (11) étant prévu pour étanchéifier la chambre de pression de référence (8) par rapport à l'organe de commande (8), au moins un deuxième dispositif d'étanchéité (12) étant prévu pour étanchéifier la chambre de pression d'alimentation (6) par rapport à ladite chambre de pression de référence (7), et au moins un troisième dispositif d'étanchéité (13) étant prévu pour étanchéifier la chambre de pression de régulation (7) par rapport à la chambre de pression d'alimentation (6),
**caractérisée en ce que**
le deuxième dispositif d'étanchéité (12) comprend un deuxième organe d'étanchéité (15) qui est disposé de manière positive dans ledit boitier (2) et/ou dans ledit organe de commande (9), tout en étant écarté dudit organe de commande (9) dans la direction radiale.

2. Soupape de régulation de pression selon la revendication 1, **caractérisée en ce que** ledit organe de commande (9) est réalisé en plusieurs parties, un corps creux (17) étant prévu qui s'étend dans la direction longitudinale, les deux extrémités du corps comprenant un premier organe d'étanchéité (14) du premier dispositif d'étanchéité (11) et un troisième organe d'étanchéité (16) du troisième dispositif d'étanchéité (13).

3. Soupape de régulation de pression selon les revendications 1 ou 2, **caractérisée en ce que** ledit organe de commande (9) est apte à être déplacé par un poussoir de soupape (18) du dispositif d'entrainement (10).

4. Soupape de régulation de pression selon les revendications 2 ou 3, **caractérisée en ce que** ledit deuxième organe d'étanchéité (15) est disposé entre ledit corps creux (17), qui s'étend dans la direction longitudinale, et ledit premier organe d'étanchéité (14).

5. Soupape selon l'une quelconque des revendications précédentes, **caractérisée en ce que** ledit boitier (2) est construit d'un premier (19), deuxième (20) et troisième (21) partie de boitier.

6. Soupape de régulation de pression selon la revendication 5, **caractérisée en ce que** ledit deuxième organe d'étanchéité (15) est disposé entre la première et la deuxième partie de boitier (19, 20).

7. Soupape de régulation de pression selon l'une quelconque des revendications 3-6, **caractérisée en ce que** ledit poussoir de soupape (18) forme une face d'étanchéité (22) dudit premier dispositif d'étanchéité (11) et est précontraint par rapport à la première partie de boitier (19) par un moyen de ressort (23).

8. Soupape de régulation de pression selon l'une quelconque des revendications 3-7, **caractérisée en ce que** ladite deuxième partie de boitier (20) forme une face d'étanchéité (24) dudit troisième dispositif d'étanchéité (13).

9. Soupape de régulation de pression selon l'une quelconque des revendications 3-8, **caractérisée en ce que** ledit troisième organe d'étanchéité (16) est précontraint par rapport à la troisième partie de boitier (21) par un deuxième moyen de ressort (25).

10. Soupape selon l'une quelconque des revendications précédentes, **caractérisée en ce qu'**une membrane (26) est prévue pour étanchéifier ledit dispositif d'entrainement (10) par rapport à la chambre de pression de référence (8).

11. Soupape de régulation de pression selon la revendication 10, caractérisée en ce ladite membrane (26) forme le premier moyen de ressort.

12. Soupape de régulation de pression selon l'une quelconque des revendications 9 - 11, **caractérisée en ce que** ledit deuxième organe d'étanchéité (15) est précontraint de sorte que cette précontrainte remplace ledit deuxième moyen de ressort (25).
